# EUROPÄISCHE PATENTSCHRIFT

(11) **EP 1 962 645 B1**
(45) Veröffentlichungstag und Bekanntmachung des Hinweises auf die Patenterteilung: **12.05.2010**
(21) Anmeldenummer: 06761675.5
(22) Anmeldetag: 20.06.2006
(51) Int. Cl.: A47D 15/00, B60R 22/10, B60R 22/357

(54) **RÜCKHALTEGURT FÜR KINDER**
RESTRAINT BELT FOR CHILDREN
CEINTURE DE SECURITE DESTINEE A DES ENFANTS

(30) Priorität: 05.08.2005 DE 202005012535 U; 05.05.2006 DE 202006007319 U
(43) Veröffentlichungstag der Anmeldung: 03.09.2008
(73) Patentinhaber: Sonnendorfer, Horst, 82178 Puchheim (DE); Wieth, Franz, 82178 Puchheim (DE)
(72) Erfinder: Sonnendorfer, Horst, 82178 Puchheim (DE); Wieth, Franz, 82178 Puchheim (DE)
(86) Internationale Anmeldenummer: PCT/DE2006/001054
(87) Internationale Veröffentlichungsnummer: WO 2007/016887

(56) Entgegenhaltungen:
- EP-A1- 0 030 779
- WO-A-2005/049394
- FR-A- 2 836 446
- GB-A- 2 175 194
- US-A- 3 248 148
- US-A- 3 294 447
- US-A- 3 306 661
- US-A- 4 720 148
- US-A- 5 061 012
- US-A- 5 398 997
- US-A- 5 439 253
- US-A- 5 681 094

## Beschreibung

### Technisches Gebiet

Die Erfindung betrifft Rückhaltegurte für Kinder an Kinderwagen, Kindertrageschalen, Kinderstühlen oder Einkaufswagen.

### Stand der Technik

Derartige Rückhaltegurte sind in verschiedensten Ausführungen bekannt.

Die US 5263726 zeigt einen Rückhaltegurt, der um den Bauch des Kindes und zwischen den Beinen des Kindes geführt wird, eine Lösung, die wenig ergonometrisch und wenig komfortabel ist.

Nachteilig bei diesem Rückhaltegurt ist zudem, dass der Gurt und die Schnallen des Gurtes bei Nichtgebrauch lose herumhängen und sich in beliebigen Teilen, in deren Nähe sie geraten verfangen können.

Hierdurch kann es nachteilig zu Einschränkungen des Gebrauchswertes führen, manchmal auch zu Schäden am Gurt oder Gurtschloss.

Bei Gurten, die an Einkaufswagen angebracht sind, können die lose herumhängenden Gurte auch die Bewegung der Korbklappe behindern und dadurch auch das Platz sparende Ineinanderschieben unmöglich machen.

Aus der US 3350136 ist ein Rückhaltegurt bekannt, der an der Rückenlehne des Kindersitzes befestigt ist und um den Oberkörper des Kindes geführt wird.

Dieser Rückhaltegurt ist auf einer Rolle aufgewickelt und wird gegen den Widerstand einer Spiralfeder aus einem Gehäuse gezogen und bei Nichtgebrauch wird der Gurt von der der Kraft der Spiralfeder wieder zurück ins Gehäuse gezogen.

Bei diesem Rückhaltegurt ist die Gefahr der losen Gurte, die sich irgendwo verfangen können zwar verringert, aber die Rolle und das Gehäuse für den Gurt haben ein störendes Volumen, welches ebenfalls beim Ineinanderschieben der Einkaufswagen hinderlich sein kann.

Ein weiterer Nachteil des aus der US 3350136 bekannten Gurtes ist die Tatsache, dass der Gurt, wenn er um das Kind gelegt wurde nicht richtig fest fixiert ist, sondern nur von der Kraft der Spiralfeder gehalten wird.

Hierdurch ist es nachteilig möglich, dass ein Kind in einem unbeobachteten Moment durch einfaches Ziehen am Gurt sich aus dem Gurt befreien kann und sich so selbst gefährden kann.

Aus der US 2004/0041457 ist ein Rückhaltegurt bekannt, welcher sich zwar Platz sparend in der Griffstange eines Einkaufswagens befindet und bei Nichtgebrauch durch eine Feder wieder zurück in das Gehäuse gezogen wird.

Dieser Stand der Technik beseitigt den bei der US 3350136 bestehenden Nachteil des voluminösen Gehäuses für den Gurt, der Nachteil, dass der Gurt nur von der Federkraft gespannt wird und sich das Kind durch Ziehen am Gurt selbst befreien kann, bleibt bestehen.

Aus der DE 103 52 095 A1 ist ein federbelasteter Rückhaltegurt bekannt, der an der Fläche angebracht ist, auf welcher das Kind sitzt. Auch bei diesem Rückhaltegurt ist der Nachteil vorhanden, dass sich das Kind durch Ziehen am Gurt selbst befreien kann. Ein weiterer Nachteil liegt darin, dass der Rückhaltegurt in eine starre Platte integriert ist und nicht bei einem zusammenklappbaren Kinderwagen verwendet werden kann.

Aus der US-A-3 248 148 ist ein Rückhaltegurt bekannt, entsprechend dem Oberbegriff des Anspruchs 1.

### Offenbarung der Erfindung

### Technische Aufgabe

Es ist Aufgabe der Erfindung einen Rückhaltegurt zu schaffen, welcher ein sicheres Anschnallen eines Kindes gewährleistet, indem die Gurtlänge auf einfache Art und Weise an die individuelle Größe des Kindes angepassbar ist und der Gurt nicht durch das Kind gelockert werden kann.

Eine weitere Aufgabe der Erfindung ist es Beschädigungen am Gurt und der Gurtschließe zu vermeiden. Für den Fall, dass der Rückhaltegurt an einem Einkaufswagen Verwendung findet, ist es auch Aufgabe der Erfindung zu vermeiden, dass durch das Verhaken des unbenutzten Gurtes an Teilen des eigenen oder eines fremden Einkaufswagens Schäden entstehen.

Eine weitere Aufgabe der Erfindung liegt darin, die Ausgestaltung der gesamten Rückhalteeinrichtung möglichst so zu gestalten, dass sie beim Zusammenklappen eines Kinderwagens, etwa einem so genannten "Buggy" nicht stört.

Die Rückhaltegurt- Anordnung soll zudem ergonometisch und komfortabel sein.

### Technische Lösung

Diese Aufgaben werden gelöst durch eine Rückhalteeinrichtung, bei welcher der Gurt und die am freien Ende des Gurtes angebrachte Gurtschließe im Ruhezustand durch eine Federkraft in ein flaches Gehäuse gezogen sind und in diesem Zustand nicht über die Konturen des Gehäuses herausragen, wobei der Gurt entgegen der Federkraft aus dem Gehäuse gezogen werden kann und der Gurt durch das Einrasten der Gurtschließe in einer Aufnahme so fixiert wird, dass er nicht weiter aus dem Gehäuse herausgezogen werden kann.

In einer Weiterbildung der Erfindung ist es vorgesehen, dass der Gurt, nachdem die Gurtschließe in der Aufnahme eingerastet ist nicht mehr weiter aus dem Gehäuse herausziehbar ist, jedoch durch die Federkraft weiterhin in das Gehäuse gezogen wird. Hierdurch ergibt es sich, dass ein Gurt, der zunächst locker um das Kind gelegt wurde automatisch immer straff anliegt.

In einer Weiterbildung der Erfindung ist das Gehäuse und die im Gehäuse liegende Mechanik so ausgebildet, dass das Gehäuse und die im Gehäuse liegende Mechanik verformbar ist.

### Vorteilhafte Wirkungen

Durch die vorliegende Erfindung wird vorteilhaft erreicht, dass der Benutzer die Länge des Gurtes automatisch richtig einstellt und ein Kind die Länge des Gurtes nicht verstellen kann, insbesondere nicht in einem unbeaufsichtigten Moment den Gurt soweit lockern kann, dass es sich aus dem Gurt befreien kann.

Das flache, verformbare Gehäuse hat den Vorteil, dass es nicht aufträgt und insbesondere beim Ineinander Stapeln von Einkaufswagen oder beim Zusammenklappen eines Kinderwagens nicht stört.

### Kurze Beschreibung der Zeichnungen

Nachfolgend wird die Erfindung anhand zweier möglichen Ausführungsbeispiele durch 4 Figuren beschrieben.

Es zeigen im Einzelnen:

Figur 1 in perspektivischer Darstellung den Sicherheitsgurt bei Nichtgebrauch.
Figur 2 in perspektivischer Darstellung den Sicherheitsgurt bei Gebrauch
Figur 3 in geschnittener Darstellung der Sicherheitsgurt
Figur 4 eine Weiterbildung der Erfindung mit flexiblem Gehäuse.

Das Gehäuse 1 ist im wesentlichen flach ausgebildet. Es ist etwa so breit, wie ein durchschnittlicher Kinderrücken. Das Gehäuse 1 hat an einer Seite eine Mulde 2, in welcher die Gurtschließe 3 Platz findet. Vom Gurt 4 ist nur ein kleines Stuck sichtbar, der übrige Teil des Gurtes 4 ist innerhalb des Gehäuses 1.

Auf der anderen, der Mulde 2 gegenüber liegenden Seite hat das Gehäuse 1 eine Ausnehmung 5, in welche die Gurtschließe 3 einrasten kann. In dieser Aufnahme 5 ist ein Betätigungselement 6 sichtbar, welches mit einem im Inneren des Gehäuses untergebrachten Mechanismus verbunden ist.

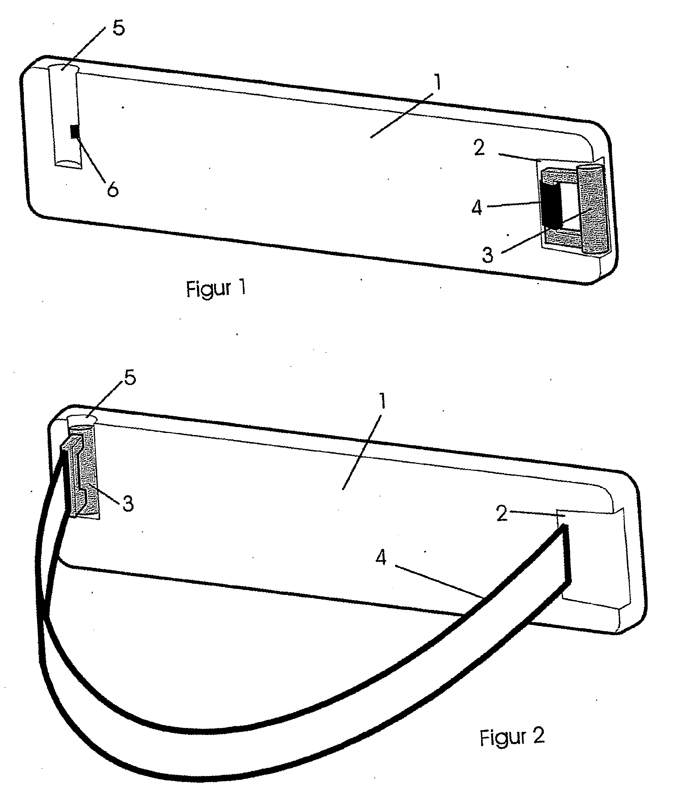

Die Figur 2 zeigt den Gurt 4 im ausgezogenen Zustand. Die Gurtschließe 3 ist in die Ausnehmung 5 eingesteckt und darin eingerastet. Durch das Einrasten der Gurtschließe 3 in der Ausnehmung 5 wurde das Betätigungselement 6 seitwärts bewegt und über den im Gehäuse 1 untergebrachten Mechanismus erfolgt ein Blockieren des Gurtes 4.

Solange sich die Gurtschließe 3 in der Ausnehmung 5 befindet, bleibt das Betätigungselement 6 seitwärts verschoben und damit auch der Gurt 4 blockiert.

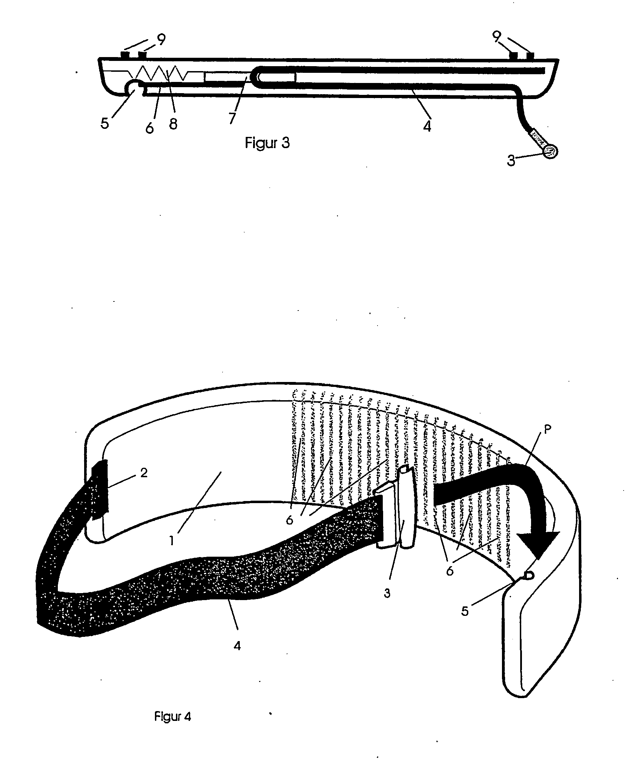

Die Figur 3 zeigt in geschnittener Darstellung das Innere des Gehäuses 1. Der Gurt 4 ist etwas herausgezogen. Der Gurt 4 verläuft in einer Schleife um einen Schlitten 7. So ist es möglich einen ausreichend langen Gurt 4 im Gehäuse 1 unterzubringen und das Gehäuse 1 gleichzeitig flach zu gestalten.

Eine Zugfeder 8 ist am Schlitten 7 befestigt und zieht hierdurch den Gurt 4 in das Gehäuse. Beim Herausziehen des Gurtes 4 wird die Feder 8 gespannt.

Sofern ein besonders langer Gurt 4 im Gehäuse 1 untergebracht werden soll, ist es auch möglich mehr als eine Umlenkung und mehr als einen Schlitten 7 im Gehäuse 1 vorzusehen. über welche der Gurt 4 dann mäanderformig verläuft.

Es kann hierdurch vorteilhaft auf eine voluminöse Rolle zum Aufwickeln des Gurtes zu verzichtet werden.

Das Gehäuse 1 ist insgesamt flächig gestaltet, um dem Kind eine große Kontaktfläche zu bieten, wodurch unangenehme Druckstellen vermieden werden.

Das Gehäuse 1 ist mit üblichen Befestigungsmitteln, etwa Schrauben oder Klemmen am Kindersitz oder Einkaufswagen befestigbar.

Die Figur 4 zeigt eine Weiterbildung der Erfindung, bei welcher das Gehäuse 1 und die im Gehäuse 1 untergebrachte Mechanik verformbar ausgebildet ist. Diese Weiterbildung ermöglicht den Einsatz der Erfindung auch dann, wenn eine starre Konstruktion störend ist, etwa bei einem zusammenklappbaren Kinderwagen, dem so genannten "Buggy".

In der gezeigten Darstellung ist der Gurt 4 herausgezogen. Im Bereich der gegenüberliegenden Seite des Gehäuses 1 befindet sich die Ausnehmung 5, in welche die Gurtschließe 3 einsteckbar ist.

Der Pfeil P gibt an, wie die am Ende des Gurtes 4 angebrachte Gurtschließe 3 in die Ausnehmung 5 einzuschieben ist.

Das Blockieren des Gurtes 4 erfolgt auch bei dieser Ausgestaltung der Erfindung in der bereits beschriebenen Art und Weise.

Das Gehäuse 1 und die darin enthaltene Mechanik ist verformbar gestaltet. Im gezeigten Beispiel wird diese Verformbarkeit erreicht durch einen rippenartigen Bereich 6 des Gehäuses 1.

Um die Verformung zu ermöglichen kann auch jede andere dem Fachmann geläufige Methode verwendet werden, etwa durch den Einsatz von Gelenken und/oder Dehnfugen.

### Ausführungsform(en) der Erfindung

Die Erfindung kann je nach Anwendungsfall in den oben beschriebenen Ausführungsformen zum Einsatz kommen.

### Gewerbliche Anwendbarkeit

Die Erfindung ist gewerblich anwendbar im großen Produktfeld der Einkaufswagen, Kindersitze, Kinderwagen und zusammenlegbaren Kinderwagen.

## Patentansprüche

1. Rückhaltegurt für Kinder, wobei der Rückhaltegurt gegen den Widerstand einer Feder aus dem Gehäuse zu ziehen ist und bei Nichtgebrauch die Federkraft den Gurt wieder zurück ins Gehäuse zieht,
**dadurch gekennzeichnet, dass**
der Gurt (4) in mäanderförmiger Weise mit mehr als einer Umlenkung um mehr als einen Schlitten (7) im Gehäuse (1) verläuft und beim Einrasten der Gurtschließe (3) in eine Ausnehmung (5) ein Betätigungselement (6) seitwärts bewegbar ist und über einen im Gehäuse (1) untergebrachten Mechanismus der Gurt (4) blockierbar ist.

2. Rückhaltegurt für Kinder nach Anspruch 1
**dadurch gekennzeichnet, dass**
bei Nichtgebrauch der Gurt (4) und die Gurtschließe (3) nicht über die Konturen des Gehäuses (1) herausragen.

3. Rückhaltegurt für Kinder nach einem der Ansprüche 1 bis 2
**dadurch gekennzeichnet, dass**
nach dem Einrasten der Schließe (3) in einer Aufnahme (5) der Gurt (3) nicht weiter aus dem Gehäuse (1) herausziehbar ist, jedoch der Gurt (3) durch die Federkraft in das Gehäuse (1) zurückziehbar ist.

4. Rückhaltegurt für Kinder nach einem der Ansprüche 1 bis 3
**dadurch gekennzeichnet, dass**
das Gehäuse (1) und die im Inneren des Gehäuses (1) enthaltene Mechanik reversibel verformbar ist.

## Claims

1. Restraint belt for children, wherein the restraint belt can be pulled out of the housing counter to the resistance of a spring and, when not in use, the spring force pulls the belt back again into the housing, **characterized in that**
the belt (4) runs in a meandering fashion with more than one deflection around more than one slide (7) in the housing (1), and when the belt closure (3) latches into a receptacle (5), an actuating element (6) can be moved sideways and the belt (4) can be locked via a mechanism accommodated in the housing (1).

2. Restraint belt for children according to Claim 1, **characterized in that**, when not in use, the belt (4) and the belt closure (3) do not protrude beyond the contours of the housing (1).

3. Restraint belt for children according to one of Claims 1 to 2, **characterized in that**, after the closure (3) is latched in a receptacle (5), the belt (3) cannot be pulled further out of the housing (1) but the belt (3) can be pulled back into the housing (1) by means of the spring force.

4. Restraint belt for children according to one of Claims 1 to 3, **characterized in that** the housing (1) and the mechanism contained in the interior of the housing (1) can be reversibly deformed.

## Revendications

1. Ceinture de sécurité destinée à des enfants, ladite ceinture de sécurité devant être tirée hors du boîtier contre la résistance d'un ressort et, en cas de non-utilisation, la force élastique tirant la ceinture de façon à la ramener dans le boîtier, **caractérisée en ce que** la ceinture (4) s'étendant dans le boîtier (1) en suivant des méandres présente plus d'un changement de direction autour de plus d'un chariot (7) et **en ce que** lors de l'encliquetage de la boucle de ceinture (3) dans un évidement (5), un élément d'actionnement (6) peut être déplacé en côté et être bloqué par l'intermédiaire d'un mécanisme de ceinture (4) disposé dans le boîtier (1).

2. Ceinture de sécurité destinée à des enfants selon la revendication 1, **caractérisée en ce qu'**en cas de non-utilisation, la ceinture (4) et la boucle de ceinture (3) ne ressortent pas des contours du boîtier (1).

3. Ceinture de sécurité destinée à des enfants selon l'une quelconque des revendications 1 à 2, **caractérisée en ce qu'**après encliquetage de la boucle (3) dans un logement (5), la ceinture (3) ne peut être tirée davantage hors du boîtier (1), sans pour autant empêcher que la ceinture (3) ne rentre davantage dans le boîtier (1) du fait de la force élastique.

4. Ceinture de sécurité destinée à des enfants selon l'une quelconque des revendications 1 à 3, **caractérisée en ce que** le boîtier (1) et le mécanisme contenu dans le boîtier (1) peuvent être déformés de façon réversible.
